# EUROPEAN PATENT SPECIFICATION

(11) **EP 3 546 145 B1**
(45) Date of publication and mention of the grant of the patent: **06.01.2021**
(21) Application number: 19164129.9
(22) Date of filing: 20.03.2019
(51) Int. Cl.: B26B 13/04, B23D 29/02

(54) **A CUTTER**
SCHNEIDER
DISPOSITIF DE COUPE

(30) Priority: 29.03.2018 GB 201805281
(43) Date of publication of application: 02.10.2019
(73) Proprietor: Carl Kammerling International Limited, Pwlheli, Gwynedd LL53 5LH (GB)
(72) Inventor: Montgomery, Dafydd Wyn, Llanelwy, Sir Dinbych LL17 0BW (GB)
(74) Representative: Crouch, David John

(56) References cited:
- WO-A1-00/25993
- DE-U1-202009 009 533
- US-A- 2 801 468
- US-A1- 2003 070 300

## Description

The present invention relates to a cutter comprising two members each having a handle portion and an operative portion, the said two members being pivoted together at a pivot located between the handle portion and the operative portion of each of the said two members so that the members are moveable relative to one another about the pivot, the cutter further comprising at least one replaceable cutter blade which is on the operative portion of one of the said two members when the cutter is in use.

One such device is disclosed in US 2801468 A. This describes metal-cutting shears comprising a pair of pivot levers each having a jaw-section and handle section longitudinally offset on opposite sides of the pivotal connection, the handle section terminating in a hand-grip loop, and an integral reinforcing rib extending along the back edge of the handle section forwardly of the hand-grip loop and formed with a finger opening directly forward of the hand-grip loop.

DE 202009009533 U1 discloses hair cutting scissors from two scissor halves, each consisting of a first and a second part, in which the first part has a first connecting section with a groove and the second part has a second connecting section with a convex portion; these two parts being connected to one another by pushing one into the other.

A further device as described in the opening paragraph of the present specification is disclosed in CN202088124 U and comprises a pair of pliers in which the operative portions are provided with respective replaceable cutter blades.

A problem encountered with such a device is that it requires separate respective screws to hold the cutter blades in place. The present invention seeks to provide a remedy.

Accordingly, the present invention is directed to a cutter having the construction set out in the opening paragraph of the present specification, in which the two members are pivoted together releasably about a pivot pin of the pivot, and in which the or each cutter blade is formed with an aperture through which extends the pivot, characterised in that the said at least one cutter blade and the said operative portion of one of the said two members are provided with respective interengaging portions, the said interengaging portions comprising a ridge and a slot.

An advantage of such a construction is that the cutter may be provided with a set of different blades for respective different types of cutting action. This allows for a diverse array of materials to be cut by the blades. Such a construction also provides a simple way of fixing the blade portion relative to the operative portion on which it is provided, and also provides a guide for the attachment of the cutter blade to its operative portion.

The said operative portion of the said one of the said two members may be provided with a recess which is complementary in shape to the blade, to receive the latter within it.

This accommodates the blade with a lower risk of obstruction to the operation of the cutter, and may increase the force which can be applied to the blade through the handle portions.

The blade and portions of the said one of the said two members surrounding the recess thereof may have surfaces which are flush with one another.

This assists in the location of the blade within the cutter, and also a smooth operation of the cutter.

The pivot pin may be provided with a screw to hold the said two members together.

This provides a simple means for securing the different parts of the cutter together.

The pivot pin may comprise a separate part which may be inserted through respective pivot holes of the said two members.

Such a construction provides a cutter which is readily assembled.

The said separate part may be flanged.

This is a relatively simple and cheap way of enabling the two members of the cutter to be held together.

A cutter blade may also be provided on the operative portion of the other of the said two members.

This enables the cutter to perform a shearing cut action.

The said two members may be identical to one another.

As a result, the cutter may be made more cheaply.

The operative portion of the other of the said two members may constitute an anvil to enable the cutter to perform an anvil cutting action.

The pivot may be integral with one of the said two members.

This facilitates assembly of the cutter.

An example of a cutter embodying the present invention will now be described in greater detail with reference to the accompanying drawings, in which:
Figure 1 is an exploded view of a first embodiment of a cutter made in accordance with the present invention;
Figure 2 shows a side view of a part of the cutter shown in Figure 1;
Figure 3 shows the other side view of the part shown in Figure 2;
Figure 4 shows a side view of a further part of the cutter shown in Figure 1;
Figure 5 shows a side view of the parts shown in Figures 3 and 4 assembled together;
Figure 6 is a perspective view of the cutter shown in Figure 1 in an assembled condition;
Figure 7 is an exploded view of a second embodiment of a cutter made in accordance with the present invention; and
Figure 8 shows a side view of a modified part of a third embodiment of a cutter made in accordance with the present invention.

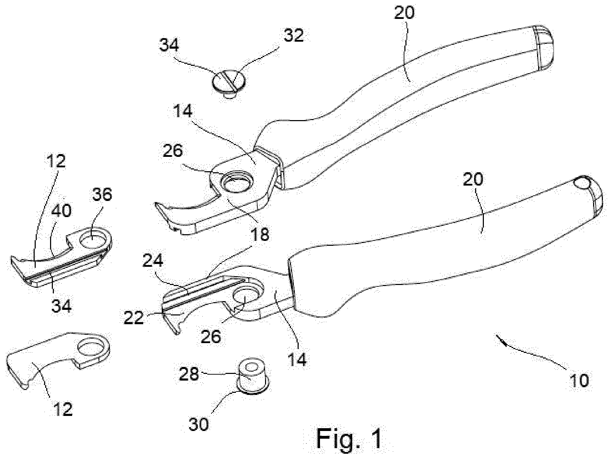

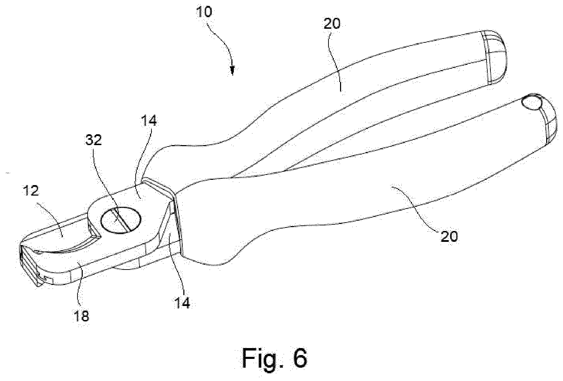

Figures 1 to 6 show a cutter 10 with two replaceable generally planar elongate metal blades 12 which are identical to one another. The cutter comprises two metal members 14 which are also identical to one another with each member having a handle portion 16 and an operative portion 18. The handle portion 16 is curved, being concave relative to the handle portion of the other member 14 when the cutter 10 is in the assembled condition, and is embedded within a plastics hand grip 20.

Each operative portion 18 is provided with a blade recess 22 which is complementary in shape to either one of the replaceable blades 12. The interior of the base of each blade recess 22 is formed with a ridge 24 of dovetail cross-section which acts as a locating guide for its associated replaceable blade. A circular through-hole 26 extends through each member 14 at a handle end of the recess 22 therewithin. A hinge or pivot pin 28 extends through the through-holes 26 to define a pivot about which the two members 14 are moveable relative to one another. The pivot pin 28 is formed with a flange 30 which engages the outerside of one of the members 14 when these parts are assembled together. A screw 32 having a head 34 is screwed into an internal screwthread within the pin 28 once the pin 28 has been inserted through the holes 26 of the two members 14, so that the screw head engages the outerside of the member 14 which is further from the flange 30, so that the pin 28 with the screw 32 hold those members 14 together in such a manner that they can be moved relative to one another about the pin 28.

A slot 35 of dovetail cross-section (corresponding to the dovetail cross-section of the ridge 24) on one side of each replaceable blade 12 engages the ridge 24 of the associated recess 22 when the cutter is in its assembled condition thereby to locate the blade 12 in the recess 22. Thus when a blade is inserted into its associated recess, an end of the ridge 24 may be inserted into an end of the slot 35, and the blade may then be slid accurately into its associated recess 22. Each replaceable blade 12 is also provided with a circular aperture in the form of a circular through-hole 36 at an end thereof which is closer to the handle portion 16 of its associated member 14. The through-hole 36 is of the same diameter as the through-hole 26. It will be appreciated that when each blade 12 is in place and the cutter 10 is assembled with the pin 28 extending through the through-holes 26 and 36 and with each ridge 24 received within the associated slot 35, the surface of each member 14 that is closest to the other member 14 and which surrounds the recess 22 is flush with a surface of the blade 12 received in that recess 22. The interrengaging ridges 24 and slots 35 provide further mechanical support for the blades 12 when the cutter is in use and further mechanical support is obtained through the hinge pin 28 as this keeps the replaceable blades 12 at the optimum pressure for effective cutting.

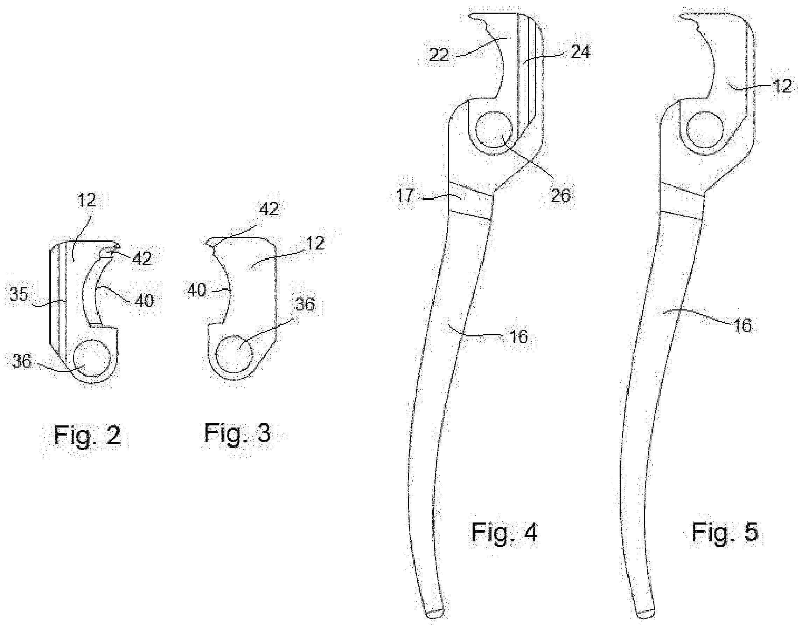

Figure 2 shows more clearly that each blade 12 is provided along its intended inner edge with a concave arcuate sharpened edge portion 40. A smaller arcuate portion 42, of smaller radius of curvature than the rest of the sharpened edge 40, at an end thereof further from the handle portion 16, is provided on each blade 12 for cutting thinner wires.

Figure 4 shows a shoulder 17 in the handle portion 16 beyond which, in a direction away from the blade recess 22, the handle portion is thicker in a direction perpendicular to the plane of view of Figure 4. As a result, the thicker parts of the handle portions 16 of the two members 14 are generally in registration with one another, viewing the assembled cutter from the side.

When the cutter 10 is in use, the hand grips 20 are opened apart a little so as to separate portions of the sharpened edges 40 of the blades 12. These edges are then placed on opposite sides of a cable which is to be cut, and the hand grips 20 are squeezed together, causing the members 14 to move towards one another about the pivot pin 28 so as to close the spacing between the sharpened edges 40 of the blade 12 and thereby to cut the cable by a shearing cutting action.

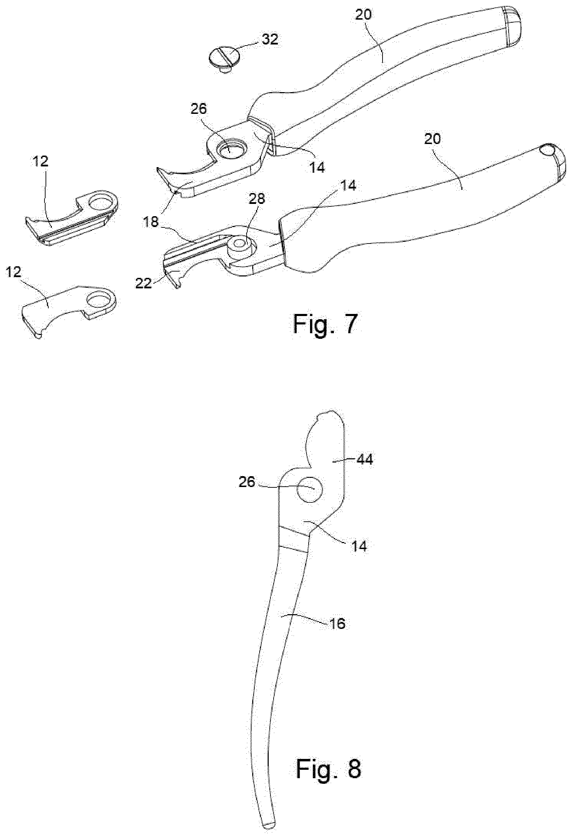

Figure 7 shows a second embodiment of the present invention in which the pivot pin 28 is an integral part of one of the members 14.

In the modification shown in Figure 8 constituting a third embodiment of the present invention, the operative portion of one of the members 14 is modified so that it constitutes an anvil 44 which complements the shape of the blade 12 of the other member 14. Such a cutter is able to cut cables with an anvil cutting action.

A set of different replaceable cutter blades 12 may be provided with a range of hardness treatments, so that the versatility of the cutter tool is made available to the user since with such a set it can be used for different cutting requirements.

Numerous variations and modifications to the illustrated constructions may occur to the reader familiar with the art without taking the resulting device outside the scope of the present invention. For example the hand grip 20 of the handle portion 16 can be made from a range of materials, including but not limited to electrically insulating material, for example, carbon fibre, ensuring further protection from high voltages. Instead of the hinge or pivot pin 28 extending through respective through-holes 26 in the members 14, one of those through-holes of one of the members 14 may be an internally screwthreaded blind hole (not shown) with the hinge or pivot pin 28, in this case being provided with an external screwthreading, extending through the through-hole 26 of the other of the members 14 into screwthreaded engagement with the blind hole of the one of the members 14.

Materials from which the blades 12 may be made are steel, ceramic, titanium, or tungsten carbide, for example. The material of the blades 12 may have a Rockwell hardness in the range from 55 to 85.

## Claims

1. A cutter (10) comprising two members (14) each having a handle portion (16) and an operative portion (18), the said two members (14) being pivoted together at a pivot located between the handle portion (16) and the operative portion (18) of each of the said two members (14) so that the members (14) are movable relative to one another about the pivot, the cutter (10) further comprising at least one releasable cutter blade (12) on the operative portion (18) of one of the said two members (14), in which the two members (14) are pivoted together releasably about a pivot pin (28) of the pivot, and in which the or each cutter blade (12) is formed with an aperture (36) through which extends the pivot pin (28), **characterised in that** the said at least one cutter blade (12) and the said operative portion (18) of one of the said two members (14) are provided with respective interengaging portions (35, 24), the said interengaging portions comprising a ridge (24) and a slot (35).

2. A cutter (10) according to claim 1, **characterised in that** the operative portion (18) of the said one of the said two members (14) is provided with a recess (22) which is complementary in shape to the blade (12), to receive the latter within it.

3. A cutter (10) according to claim 2, **characterised in that** the blade (12) and portions of the said one of the said two members (14) surrounding the recess (22) thereof have surfaces which are flush with one another.

4. A cutter (10) according to any preceding claim,
**characterised in that** the pivot pin (28) is provided with a screw (32) with a screw head (34) to hold the said two members together.

5. A cutter (10) according to any preceding claim,
**characterised in that** the pivot pin (28) comprises a separate part which can be inserted through respective pivot holes (26) of the said two members (14).

6. A cutter (10) according to claim 5, **characterised in that** the said separate part (28) is flanged (30).

7. A cutter (10) according to any preceding claim,
**characterised in that** such a cutter blade (12) is also provided on the operative portion (18) of the other of the said two members (14).

8. A cutter (10) according to any preceding claim,
**characterised in that** the said two members (14) are identical to one another.

9. A cutter (10) according to anyone of claims 1 to 6,
**characterised in that** the operative portion (18) of the other of the said two members (14) constitutes an anvil (44) to enable the cutter (10) to perform an anvil cutting action.

10. A cutter (10) according to any one of claims 1 to 4, or to claim 7 or claim 9 read as appended to any one of claims 1 to 4 , **characterised in that** the pivot pin (28) is integral with one of the said two members (14).

11. A cutter blade (12) for a cutter according to any preceding claim, the cutter blade having an aperture (36) to enable the pivot pin (28) of the cutter to extend through it, and the cutter blade having a ridge (24) or slot (35) for interengaging with a corresponding slot or ridge of the cutter.

## Patentansprüche

1. Schneidvorrichtung (10), die zwei Elemente (14) umfasst, die jeweils einen Griffabschnitt (16) und einen operativen Abschnitt (18) aufweisen, wobei die zwei Elemente (14) gemeinsam an einem Drehzapfen, der zwischen dem Griffabschnitt (16) und dem operativen Abschnitt (18) jedes der zwei Elemente (14) liegt, derart geschwenkt werden, dass die Elemente (14) relativ zueinander um den Drehzapfen bewegbar sind, wobei die Schneidvorrichtung (10) ferner mindestens eine freigebbare Schneidvorrichtungsklinge (12) auf dem operativen Abschnitt (18) eines der zwei Elemente (14) umfasst, wobei die zwei Elemente (14) gemeinsam um einen Drehzapfenstift (28) des Drehzapfens freigebbar geschwenkt werden, und wobei die oder jede Schneidvorrichtungsklinge (12) mit einer Öffnung (36) gebildet ist, durch die sich der Drehzapfenstift (28) erstreckt,
**dadurch gekennzeichnet, dass** die mindestens eine Schneidvorrichtungsklinge (12) und der operative Abschnitt (18) eines der zwei Elemente (14) mit jeweiligen ineinandergreifenden Abschnitten (35, 24) versehen sind, wobei die ineinandergreifenden Abschnitte einen Grat (24) und einen Schlitz (35) umfassen.

2. Schneidvorrichtung (10) nach Anspruch 1, **dadurch gekennzeichnet, dass** der operative Abschnitt (18) des einen der zwei Elemente (14) mit einer Vertiefung (22) versehen ist, die in der Form zu der Klinge (12) komplementär ist, um Letztere darin aufzunehmen.

3. Schneidvorrichtung (10) nach Anspruch 2, **dadurch gekennzeichnet, dass** die Klinge (12) und Abschnitte des einen der zwei Elemente (14), die die Vertiefung (22) davon umgeben, Oberflächen aufweisen, die miteinander bündig sind.

4. Schneidvorrichtung (10) nach einem vorstehenden Anspruch, **dadurch gekennzeichnet, dass** der Drehzapfenstift (28) mit einer Schraube (32) mit einem Schraubenkopf (34) zum Zusammenhalten der zwei Elemente versehen ist.

5. Schneidvorrichtung (10) nach einem vorstehenden Anspruch, **dadurch gekennzeichnet, dass** der Drehzapfenstift (28) ein separates Teil umfasst, das durch jeweilige Drehzapfenlöcher (26) der zwei Elemente (14) hindurch eingesetzt werden kann.

6. Schneidvorrichtung (10) nach Anspruch 5, **dadurch gekennzeichnet, dass** das separate Teil (28) einen Flansch (30) aufweist.

7. Schneidvorrichtung (10) nach einem vorstehenden Anspruch, **dadurch gekennzeichnet, dass** eine solche Schneidvorrichtungsklinge (12) auch auf dem operativen Abschnitt (18) des anderen der zwei Elemente (14) bereitgestellt ist.

8. Schneidvorrichtung (10) nach einem vorstehenden Anspruch, **dadurch gekennzeichnet, dass** die zwei Elemente (14) miteinander identisch sind

9. Schneidvorrichtung (10) nach einem der Ansprüche 1 bis 6, **dadurch gekennzeichnet, dass** der operative Abschnitt (18) des anderen der zwei Elemente (14) einen Amboss (44) bildet, um es der Schneidvorrichtung (10) zu ermöglichen, eine Ambossschneidaktion auszuführen.

10. Schneidvorrichtung (10) nach einem der Ansprüche 1 bis 4 oder nach Anspruch 7 oder Anspruch 9, wie an einen der Ansprüche 1 bis 4 angefügt gelesen, **dadurch gekennzeichnet, dass** der Drehzapfenstift (28) aus einem Stück mit einem der zwei Elemente (14) besteht.

11. Schneidvorrichtungsklinge (12) für eine Schneidvorrichtung nach einem vorstehenden Anspruch, wobei die Schneidvorrichtungsklinge eine Öffnung (36) aufweist, um es dem Drehzapfenstift (28) der Schneidvorrichtung zu ermöglichen, sich dadurch zu erstrecken, und wobei die Schneidvorrichtungsklinge einen Grat (24) oder Schlitz (35) zum Ineinandergreifen in einen entsprechenden Schlitz oder Grat der Schneidvorrichtung aufweist.

## Revendications

1. Outil de coupe (10) comprenant deux éléments (14) ayant chacun une partie poignée (16) et une partie opérative (18), lesdits deux éléments (14) pivotant ensemble au niveau d'un pivot situé entre la partie poignée (16) et la partie opérative (18) de chacun desdits deux éléments (14), de sorte que les éléments (14) sont mobiles l'un par rapport à l'autre autour du pivot, l'outil de coupe (10) comprenant en outre au moins une lame de coupe amovible (12) sur la partie opérative (18) d'un desdits deux éléments (14),dans lequel les deux éléments (14) pivotent ensemble de façon amovible autour d'un axe de pivotement (28) du pivot et dans lequel la lame de coupe ou chacune des lames de coupe (12) est formée avec un orifice (36) à travers lequel passe l'axe de pivotement (28), **caractérisé en ce que** ladite au moins une lame de coupe (12) et ladite partie opérative (18) d'un desdits deux éléments (14) sont dotées de parties en prise l'une avec l'autre (35, 24), lesdites parties en prise comprenant une nervure (24) et une rainure (35).

2. Outil de coupe (10) selon la revendication 1, **caractérisé en ce que** la partie opérative (18) dudit un desdits deux éléments (14) est dotée d'un renfoncement (22) qui est de forme complémentaire à la lame (12) pour recevoir cette dernière.

3. Outil de coupe (10) selon la revendication 2, **caractérisé en ce que** la lame (12) et les parties dudit un desdits deux éléments (14) entourant le renfoncement (22) de celui-ci ont des surfaces qui sont alignées l'une avec l'autre.

4. Outil de coupe (10) selon l'une quelconque des revendications précédentes, **caractérisé en ce que** l'axe de pivotement (28) est doté d'une vis (32) avec une tête de vis (34) pour maintenir lesdits deux éléments ensemble.

5. Outil de coupe (10) selon l'une quelconque des revendications précédentes, **caractérisé en ce que** l'axe de pivotement (28) comprend une pièce séparée qui peut être insérée à travers les trous de pivotement (26) respectifs desdits deux éléments (14).

6. Outil de coupe (10) selon la revendication 5, **caractérisé en ce que** ladite pièce séparée (28) est dotée d'une bride (30).

7. Outil de coupe (10) selon l'une quelconque des revendications précédentes, **caractérisé en ce qu'**une telle lame de coupe (12) est aussi disposée sur la partie opérative (18) de l'autre desdits deux éléments (14).

8. Outil de coupe (10) selon l'une quelconque des revendications précédentes, **caractérisé en ce que** lesdits deux éléments (14) sont identiques les uns aux autre.

9. Outil de coupe (10) selon l'une quelconque des revendications 1 à 6, **caractérisé en ce que** la partie opérative (18) de l'autre desdits deux éléments (14) constitue une enclume (44) pour permettre à l'outil de coupe (10) d'effectuer une action de coupe à enclume.

10. Outil de coupe (10) selon l'une quelconque des revendications 1 à 4 ou selon la revendication 7 ou la revendication 9 prise en combinaison à l'une quelconque des revendications 1 à 4, **caractérisé en ce que** l'axe de pivotement (28) est intégré avec un desdits deux éléments (14) .

11. Lame de coupe (12) pour un outil de coupe selon l'une quelconque des revendications précédentes, la lame de coupe ayant un orifice (36) à travers lequel l'axe de pivotement (28) de l'outil de coupe peut s'étendre et la lame de coupe ayant une nervure (24) ou une rainure (35) pour entrer en prise avec une rainure ou une nervure correspondante de l'outil de coupe.
